# EUROPÄISCHE PATENTSCHRIFT

(11) **EP 0 813 098 B1**
(45) Veröffentlichungstag und Bekanntmachung des Hinweises auf die Patenterteilung: **23.01.2002**
(21) Anmeldenummer: 97106645.1
(22) Anmeldetag: 22.04.1997
(51) Int. Cl.: G02F 1/39

(54) **Optischer parametrischer Oszillator**
Optical parametric oscillator
Oscillateur paramétrique optique

(30) Priorität: 12.06.1996 DE 19623477
(43) Veröffentlichungstag der Anmeldung: 17.12.1997
(73) Patentinhaber: Wallenstein, Richard, Prof. Dr., 67269 Grünstadt (DE)
(72) Erfinder: Bäder, Uwe, 67663 Kaiserslautern (DE); Borsutzky, Annette, Dr., 67657 Kaiserslautern (DE); Friedrichs, Thorsten, 67661 Kaiserslautern-Hohenecken (DE); Urschel, Rainer, 67661 Kaiserlautern-Siegelbach (DE); Wallenstein, Richard, Prof.-Dr., 67269 Grünstadt (DE)
(74) Vertreter: von Hellfeld, Axel, Dr. Dipl.-Phys.

(56) Entgegenhaltungen:
- US-A- 3 551 844
- US-A- 3 617 936
- PATENT ABSTRACTS OF JAPAN vol. 9, no. 270 (E-353) & JP 60 115279 A (HITACHI)
- MASSEY G A ET AL: "Generation of frequency-controlled nanosecond and picosecond optical pulses by high-gain parametric amplification" 5TH BIANNUAL CONFERENCE ON LASER ENGINEERING AND APPLICATIONS, WASHINGTON, DC, USA, 28-30 MAY 1975, Bd. QE-12, Nr. 2, pt.2, ISSN 0018-9197, IEEE JOURNAL OF QUANTUM ELECTRONICS, FEB. 1976, USA, Seiten 143-147, XP002059650
- ROBERTSON G ET AL: "EFFICIENT, SINGLE-AXIAL MODE OSCILLATION OF A BETA BARIUM BORATE OPTICAL PARAMETRIC OSCILLATOR PUMPED BY AN EXCIMER LASER" APPLIED PHYSICS LETTERS, Bd. 62, Nr. 2, 11.Januar 1993, Seiten 123-125, XP000332225
- HUISKEN F ET AL: "SINGLE-MODE KTIOPO4 OPTICAL PARAMETRIC OSCILLATOR" OPTICS LETTERS, Bd. 20, Nr. 22, 15.November 1995, Seiten 2306-2308, XP000537159
- SERKLAND D K ET AL: "CONTINUOUS-WAVE TOTAL-INTERNAL-REFLECTION OPTICAL PARAMETRIC OSCILLATOR PUMPED AT 1064 NM" OPTICS LETTERS, Bd. 19, Nr. 14, 15.Juli 1994, Seiten 1046-1048, XP000455029
- YANG S T ET AL: "Power and spectral characteristics of continuous-wave parametric oscillators: the doubly to singly resonant transition" JOURNAL OF THE OPTICAL SOCIETY OF AMERICA B (OPTICAL PHYSICS), SEPT. 1993, USA, Bd. 10, Nr. 9, ISSN 0740-3224, Seiten 1684-1695, XP002059651
- YANG S T ET AL: "1.9-W CW RING-CAVITY KTP SINGLY RESONANT OPTICAL PARAMETRIC OSCILLATOR" OPTICS LETTERS, Bd. 19, Nr. 7, 1.April 1994, Seiten 475-477, XP000434190

## Beschreibung

Die Erfindung betrifft einen optischen parametrischeh Oszillator mit zumindest einem optisch nichtlinearen Kristall. Solche Oszillatoren werden üblicherweise mit OPO bezeichnet und dienen der Erzeugung kohärenter Strahlung, deren Wellenlänge kontinuierlich abstimmbar ist.

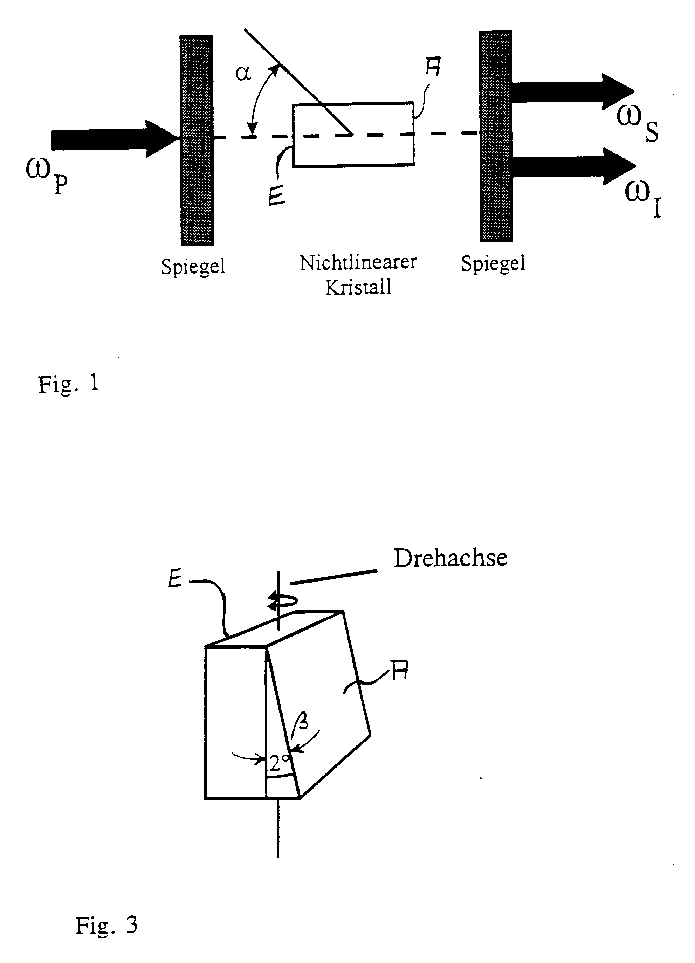

Ein OPO enthält gemäß Fig. 1 als wesentliche Komponenten einen optischen Resonator und einen optisch nichtlinearen Kristall. In der einfachsten Anordnung besteht der optische Resonator aus zwei plan-parallelen Spiegeln. Der Kristall ist zwischen diesen Spiegeln angeordnet und gegebenenfalls zur Abstimmung der Wellenlänge um eine Achse drehbar, die senkrecht zur optischen Achse des Resonators steht. Diese Drehung ist in Fig. 1 mit dem Winkel "µ" dargestellt.

Ein OPO wird üblicherweise mit kohärenter Strahlung angeregt, zum Beispiel mittels gepulster oder kontinuierlicher (cw) Laserstrahlung.

Die vom OPO emittierte Strahlung besteht aus der sogenannten Signalwelle und der sogenannten Idlerwelle. Wegen der Energieerhaltung gilt für die Frequenzen der Pumpstrahlung und der erzeugten Signalwelle und der Idlerwelle: ωₚ = ωₛ + ωᵢ.

In Abhängigkeit von der Wellenlänge der Pumpstrahlung (ωₚ) sowie der kristallografischen Orientierung des Kristalls (Drehwinkel) haben die Signalwelle und die Idlerwelle unterschiedliche Wellenlängen (ωₛ bzw. ωᵢ).

Das optische Spektrum dieser Wellen wird bei spektral einmodiger Anregungsstrahlung im wesentlichen durch die optischen Moden des Resonators bestimmt.

Eine der wichtigsten Eigenschaften von OPOs ist die Möglichkeit, die Wellenlängen der erzeugten Signal- und Idlerwellen kontinuierlich durchzustimmen.

Eine solche kontinuierliche Abstimmbarkeit eines OPO ist jedoch nur dann in einfacher Weise möglich, wenn der optische Resonator einfach-resonant ist, d.h. der Resonator entweder für die Signalwelle oder für die Idlerwelle resonant ist. Sogenannte doppelt-resonante Resonatoren, d.h. Resonatoren, die sowohl für die Signal- als auch für die Idlerwelle resonant sind, erlauben im allgemeinen keine kontinuierliche Abstimmbarkeit der Modenfrequenzen. Die doppelte Resonanz führt zu sogenannten Modenclustern, in denen der OPO bevorzugt oszilliert (vgl. "Oscillators", R.G. Smith in Advances in Lasers, Albert K. Levine et al, eds., New York: Dekker, 1976, Chapter 4, Seiten 189-307, insb. S. 246 ff).

Einfach-resonante optische Resonatoren sind technisch zum Beispiel dadurch zu realisieren, daß die Resonatorspiegel eine hohe Reflektivität für die resonante Welle (z.B. die Signalwelle) besitzen, während die Spiegel für die andere, nicht-resonante Welle (z.B. die Idlerwelle) nur eine sehr geringe, im Idealfall keine Reflektivität haben. Andere Ausführungen von einfach-resonanten Resonatoren enthalten wellenlängenselektive (z.B. dispersive) optische Elemente, wie z.B. ein Prisma, ein Gitter oder ein Fabry-Perot-Etalon (vgl. hierzu die folgenden drei Literaturstellen: "Continuous-wave singly resonant optical parametric oscillator pumped by a single-frequency resonantly doubled Nd:YAG laser", S.T. Yang, R.C. Eckhardt, and R.L. Byer, OPTICS LETTERS 18, 971 (1993); "Narrowband β-BaB₂O₄ optical parametric oscillator in a grazing-incidence configuration", L.A.W. Gloster, I.T. McKinnie, Z.X. Jiang, T.A. King, J.M. Boon-Engering, W.E. van der Veer and W. Hogervorst, J.OPT. SOC. AM. B, 2117 (1995); "Efficient, single-axial mode oscillation of a bariumborate optical parametric oscillator pumped by an excimer laser", G.

Robertson, A. Henderson and M.H. Dunn, APPL. PHYS. LETT. 62, 123 (1993)).

Wird ein einfach-resonanter Resonator durch wellenlängenselektive Resonatorspiegel realisiert, so besteht die Schwierigkeit, daß die Spiegel stets auch für die sogenannte nicht-resonante Welle eine gewisse Reflektivität besitzen. Selbst geringe Restreflexionen für diese Welle führen dazu, daß die Schwelle des OPO für diejenigen Moden der resonanten Welle herabgesetzt ist, für die die Frequenz der entsprechenden "nicht-resonanten Welle" ebenfalls einer Resonatormode entspricht. Dies hat zur Folge, daß der OPO bevorzugt auf solchen Frequenzen der Signalwelle oszilliert, für die die Frequenz der Idlerwelle ebenfalls eine Resonanzfrequenz des optischen Resonators ist. Eine solche, durch die Restreflexion der Resonatorspiegel für die eigentlich nicht-resonante Welle verursachte Doppelresonanz kann durch im Resonator angeordnete wellenlängenselektive (z.B. dispersive) Elemente, wie zum Beispiel ein Prisma, beseitigt werden.

Die Frequenzen der Wellen eines OPO mit einem optisch einfach-resonanten Resonator sind abstimmbar, zum Beispiel dadurch, daß die optische Länge des Resonators verändert wird (oder auch durch Änderung des Gasdruckes im Resonator). Zur Änderung der optischen Länge des Resonators kann beispielsweise die Position eines Resonatorspiegels mit piezoelektrischen Kristallen in Richtung der optischen Resonatorachse verändert werden. Die durch diese Veränderung der Resonatorlänge erreichbare Abstimmbarkeit der Frequenz ist jedoch nur dann kontinuierlich und mit zumindest angenähert konstanter Ausgangsleistung (der emittierten Strahlung) möglich, wenn der Resonator keine Elemente enthält, deren optische Verluste frequenzabhängig sind.

In Applied Optics, Vol. 35, No. 6, 20. Feb. 1996, Seiten 890-902 wird ein OPO gezeigt (Fig. 5b), bei dem die Pump-, Signal- und Idler-Strahlung unter dem Brewster-Winkel auf den Kristall trifft. Die JP-A-7-45 895 (in Patent Abstracts of Japan) beschreibt einen OPO, dessen Stirnflächen so gewählt sind, daß die Oszillatorstrahlung beim Eintritt in die Stirnflächen einen Brewster-Winkel mit den Stirnflächen bildet.

Aus der US 3,551,844 ist ein optisch parametrischer Oszillator bekannt, bei dem die Endflächen der eingesetzten Kristalle um größere Winkel wie etwa 90° zueinander geneigt sind, wodurch gegenüber einer anderen Ausführungsform Reflektoren in dem Oszillator entfallen.

Der Artikel "Generation of Frequency-Controlled Nanosecond and Picosencond Optical Pulses by High-Gain Parametric Amplification" von G. Massey et al. in IEEE, Journal of Quantum Electronics, Band 12 (1976), Seiten 143 - 147 wird ein optischer parametrischer Verstärker vorgestellt, bei dem ein Kristall verwendet wird, dessen eine Endfläche um einen Winkel von 85° bezüglich der optischen Ausbreitungsrichtung geneigt ist, um eine optische Rückkopplung zu vermeiden.

Der Erfindung liegt die Aufgabe zugrunde, einen optischen parametrischen Oszillator bereitzustellen, dessen Frequenzen auf einfache Weise kontinuierlich abstimmbar sind, ohne daß sich im Abstimmbereich die Leistung der erzeugten Strahlung wesentlich ändert, wobei der Oszillator einfach-resonant sein soll.

Zur Lösung dieser Aufgabe sieht die Erfindung nach einer ersten Ausführung einen optischen parametrischen Oszillator vor, bei dem die Ebenen der Ein- und Austrittsfacetten des optisch nichtlinearen Kristalls einen spitzen Winkel miteinander bilden, also nicht plan-parallel sind, wobei der Winkel (β) so gewählt ist, daß der Resonator des OPO für die Signal- oder die Idlerwelle eine hohe Resonatorgüte und für die jeweils andere Welle eine geringe Resonatorgüte hat.

Der Erfindung liegt die Erkenntnis zugrunde, daß frequenzabhängige Verluste im OPO-Resonator insbesondere durch Reflexionen an plan-parallelen Flächen des nichtlinearen Kristalls entstehen. Der Kristall wirkt nämlich dann wie ein Fabry-Perot-Interferometer mit niedriger Finesse, wobei die Transmission des Kristalls frequenzabhängig ist. Die Erfindung sieht also vor, daß im OPO ein optisch nichtlinearer Kristall verwendet wird, dessen Ein- und Austrittsfacetten prismatisch gegeneinander geneigt sind.

Die genannte Wahl des Winkels hat zur Folge, daß der Resonator bei gegebenen Wellenlängen der Signal- und Idlerwelle für die resonante Welle voll wirksam ist, während die Resonatorgüte für die nicht-resonante Welle stark verringert wird.

Je nach den optischen Eigenschaften OPO-Resonators und des nichtlinearen Kristalls liegt der spitze Winkel β, den die Ebenen der Ein- und Austrittsfacetten des Kristalls miteinander bilden, im Bereich von etwa 0,1° bis 15°, vorzugsweise im Bereich von 1° bis 10°, weiter vorzugsweise im Bereich von 1° bis 6° und besonders bevorzugt im Bereich von 1,5° bis 2,5°.

Der Winkel β so gewählt ist, daß der Resonator des OPO - aufgrund der prismatischen Wirkung des Kristalls - für die Signal- oder die Idlerwelle eine hohe Resonatorgüte und für die jeweils andere Welle eine geringe Resonatorgüte hat.

Die erfindungsgemäß vorgesehene Neigung der Ein- und Austrittsfacetten des Kristalls zueinander hat eine andere Funktion als ein OPO mit Kristallen, die im Brewster-Winkel angeordnet sind.

Eine weitere bevorzugte Ausgestaltung der Erfindung sieht vor, daß die Austrittsfacette A des OPO-Kristalls so geneigt ist, daß beim Drehen des Kristalls der Resonator in der Ebene der Phasenanpassung möglichst nicht dejustiert wird.

Nachfolgend wird die Erfindung anhand eines in den Figuren dargestellten Ausführungsbeispieles näher erläutert. Es zeigt:
- Fig. 1: schematisch einen OPO, bei dem die Erfindung realisiert wird;
- Fig. 2: ein Modenspektrum eines herkömmlichen OPO für unterschiedliche Resonatorlängen;
- Fig. 3: schematisch einen erfindungsgemäßen optisch nichtlinearen Kristall für einen OPO und
- Fig. 4: das Modenspektrum eines erfindungsgemäßen OPO mit einem Kristall gemäß Fig. 3.

Beim in Fig. 1 schematisch dargestellten OPO sind die Eintrittsfacette und die Austrittsfacette des nichtlinearen Kristalls mit "E" bzw. "A" bezeichnet. Die Pumpstrahlung ist durch ihre Frequenz ωₚ angedeutet und die Signalstrahlung durch die Frequenz ωₛ sowie die Idlerstrahlung durch die Frequenz ωᵢ. Die plan-parallelen Spiegel bilden den Resonator.

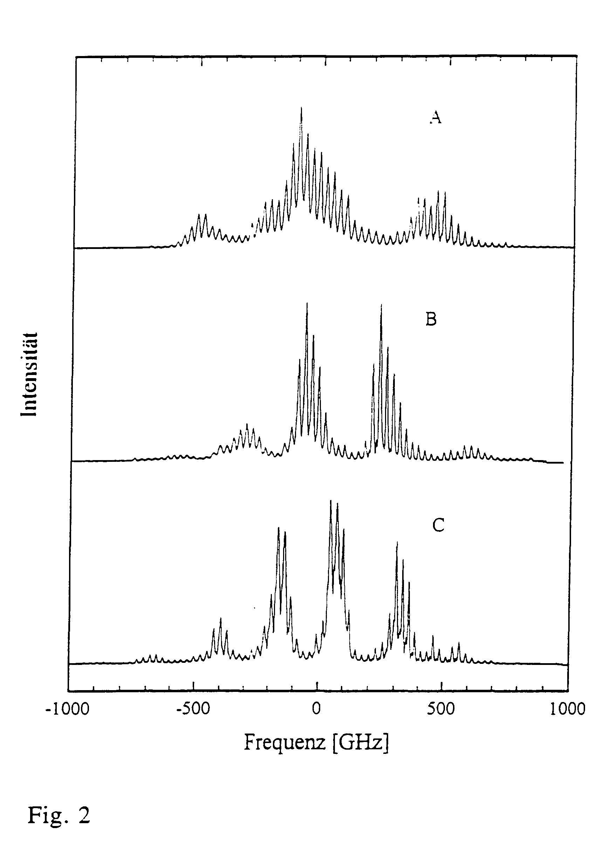

Fig. 2 zeigt die Modenspektren eines herkömmlichen OPO aus Bariumborat für unterschiedliche Resonatorlängen, ohne die erfindungsgemäße Ausgestaltung des OPO-Kristalls. Die Ein- und Austrittsfacetten (Flächen) des Kristalls sind also plan-parallel, ebenso die Spiegel des OPO-Resonators. Der OPO wird mit einfrequenter Strahlung (355 nm) eines gütegeschalteten Nd:YAG-Lasers angeregt. Die Wellenlänge der Signalstrahlung beträgt 550 nm. Die Oberflächen des 3 mm langen Kristalls aus Bariumborat sind mit einer sol-gel-Schicht versehen. Diese Beschichtung vermindert die Reflektivität der Kristallflächen für die Signalwelle auf ca. 1 bis 2%. Trotzdem zeigt das Modenspektrum für alle drei in Fig. 2 gezeigten Beispiele A, B und C mit unterschiedlichen Resonatorlängen eine starke Intensitätsmodulation, d.h. die Intensität ist sehr stark von der Frequenz abhängig und weist ausgeprägte Maxima auf. Der Frequenzabstand dieser Intensitätsmodulation liegt bei 200 bis 600 GHz und ist von der optischen Länge des Resonators abhängig. Die Resonatorlängen sind wie folgt: A = 5,4 mm; B = 5,5 mm; C = 5,8 mm. Die Frequenz der Intensitätsmodulation entspricht der Schwebung zwischen den Frequenzabständen des freien Spektralbereichs des optischen Resonators und des Fabry-Perot-Etalons, das durch die Oberflächen des nichtlinearen Kristalls gebildet wird.

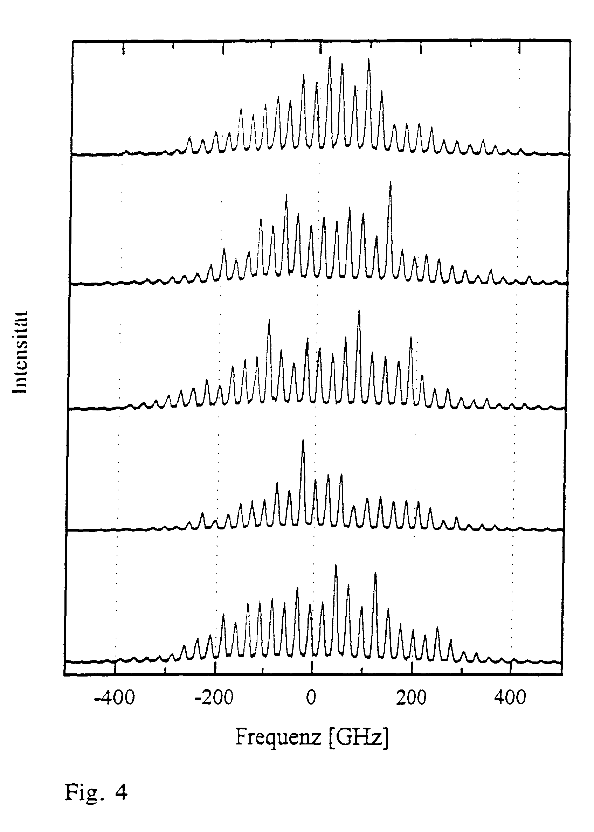

Nach einer zwerten Ausführung der Erfindung wird im OPO ein nichtlinearer Kristall gemäß Fig. 3 verwendet. Die Austrittsfacette A des nichtlinearen Kristalls ist so gegen die Drehachse des Kristalls geneigt, daß beim Drehen des Kristalls der Resonator in der Ebene der Phasenanpassung nicht dejustiert wird. Die Ebenen der Eintrittsfacette E und der Austrittsfacette A des Kristalls bilden den spitzen Winkel β, der beim dargestellten Ausführungsbeispiel 2° beträgt.

Bei einem OPO mit einem Kristall gemäß Fig. 3 sind im Kristall zwar die Signal- und Idlerwelle noch kolinear, außerhalb des Kristalls sind jedoch die Richtungen dieser Wellen verschieden. In Abhängigkeit von der Justierung der Resonatorspiegel ist der Resonator resonant entweder für die Signal- oder die Idlerwelle. Der OPO ist somit einfach-resonant. Der Neigungswinkel der Kristallfacetten ist so zu wählen, daß der Resonator bei gegebenen Wellenlängen der Signal- und Idlerwelle für die resonante Welle voll wirksam ist, während die Resonatorgüte für die andere, nicht-resonante Welle gering ist.

Somit hat der prismatische Kristall die gleiche physikalische Wirkung wie ein resonatorinternes Prisma (vgl. den obengenannten Stand der Technik von S.P. Young, R.C. Eckhardt und R.L. Byer). Im Vergleich zu einem resonatorinternen Prisma gemäß dem Stand der Technik bietet aber der hier vorgeschlagene prismatische Kristall zum einen den Vorteil, daß kein zusätzliches Prisma benötigt wird und somit keine zusätzlichen optischen Verluste in den Resonator eingebracht werden. Zum anderen ist der prismatische nichtlineare Kristall auch in OPOs mit extrem kurzen Resonatoren einsetzbar. Derart kurze Resonatoren haben je nach Anwendung beträchtliche Vorteile. So sind OPOs mit kurzem Resonator und entsprechend großem Modenabstand zum Beispiel vorteilhaft bei der Realisierung von spektral einmodigen OPO-Systemen gemäß dem deutschen Patent 42 19 169. Soll der Resonator extrem kurz sein, so ist das Einsetzen eines zusätzlichen resonatorinternen Prismas nicht möglich.

Da die Ein- und Austrittsflächen des nichtlinearen Kristalls nicht plan-parallel sind, wirkt der Kristall nicht wie ein Fabry-Perot-Etalon und verursacht deshalb auch keine frequenzabhängigen Transmissionsverluste. Dies wird durch die experimentellen Ergebnisse gemäß Fig. 4 bestätigt. Wird im OPO ein Kristall gemäß Fig. 3 mit einer geneigten Austrittsfläche (Neigungswinkel 2°) verwendet, so wird die in Fig. 2 noch zu beobachtende Intensitätsmodulation im Modenspektrum wirksam unterdrückt. Im OPO wurde die Austrittsfläche so geneigt, daß beim Drehen des Kristalls der Resonator in der Ebene der Phasenanpassung nicht dejustiert wird. Fig. 4 zeigt fünf Modenspektren des OPO mit prismatischem Kristall. Aufgetragen ist die Intensität gegen die Frequenz. Die Resonatorlänge wurde jeweils um 0,1 mm verändert. Der Modenabstand beträgt 26 GHz. Die Modenspektren gemäß Fig. 4 zeigen die gewünschte kontinuierliche Änderung der Intensitäten entsprechend den Frequenzen der einzelnen Moden, jedoch ohne eine Intensitätsmodulation aufgrund eines Fabry-Perot-Effektes im OPO-Kristall, wie noch die Fig. 2 zeigt.

## Patentansprüche

1. Optischer parametrischer Oszillator (OPO) mit zumindest einem optisch nichtlinearen Kristall in einem optischen Resonator
**dadurch gekennzeichnet, daß**
die Ebenen der Ein- und Austrittsfacetten (E, A) des Kristalls einen spitzen Winkel (β) bilden, wobei der Winkel (β) so gewählt ist, daß der Resonator für die Signal- oder die Idlerwelle eine hohe Resonatorgüte und für die jeweils andere Welle eine geringe Resonatorgüte hat.

2. Optischer parametrischer Oszillator nach Anspruch 1,
**dadurch gekennzeichnet, daß**
der spitze Winkel (β) im Bereich von etwa 0,1 bis 15°, vorzugsweise im Bereich von 1° bis 3° liegt.

3. Optischer parametrischer Oszillator nach einem der Ansprüche 1 oder 2,
**dadurch gekennzeichnet, daß**
die Austrittsfacette (A) des Kristalls so geneigt ist, daß beim Drehen des Kristalls der Resonator in der Ebene der Phasenanpassung nicht dejustiert wird.

4. Optischer parametrischer Oszillator (OPO) mit zumindest einem optisch nichtlinearen Kristall in einem optischen Resonator
**dadurch gekennzeichnet, daß**
die Ebenen der Ein- und Austrittsfacetten (E, A) des Kristalls einen spitzen Winkel (β) bilden, wobei die Austrittsfacette (A) des Kristalls so geneigt ist, daß beim Drehen des Kristalls der Resonator in der Ebene der Phasenanpassung nicht dejustiert wird.

## Claims

1. Optical parametric oscillator (OPO) comprising at least one optically nonlinear crystal in an optical resonant cavity, **characterized in that** the planes of the entry and exit facets (E, A) of the crystal form an acute angle (β), the angle (β) being chosen in such a way that the resonant cavity has a high resonant cavity Q-factor for the signal wave or the idler wave and has a low resonant cavity Q-factor for the respective other wave.

2. Optical parametric oscillator according to Claim 1, **characterized in that** the acute angle (β) is in the range from about 0.1 to 15°, preferably in the range from 1 to 3°.

3. Optical parametric oscillator according to either of Claims 1 or 2, **characterized in that** the exit facet (A) of the crystal is inclined in such a way that, on rotating the crystal, the resonant cavity does not become misaligned in the phase-matching plane.

4. Optical parametric oscillator (OPO) comprising at least one optically nonlinear crystal in an optical resonant cavity, **characterized in that** the planes of the entry and exit facets (E, A) of the crystal form an acute angle (β), the exit facet (A) of the crystal being inclined in such a way that, on rotating the crystal, the resonant cavity does not become misaligned in the phase-matching plane.

## Revendications

1. Oscillateur optique paramétrique (OPO) comprenant au moins un cristal optiquement non linéaire dans un résonateur optique
**caractérisé en ce que**
les plans des facettes d'entrée et de sortie (E, A) du cristal forment un angle aigu (β), l'angle (β) étant choisi de telle façon que le résonateur ait une qualité de résonateur élevée pour l'onde de signal ou l'onde idler et une faible qualité de résonateur pour chaque autre onde.

2. Oscillateur optique paramétrique selon la revendication 1,
**caractérisé en ce que**
l'angle aigu (β) se situe dans la plage d'environ 0,1° à 15°, de préférence dans la plage de 1° à 3°.

3. Oscillateur optique paramétrique selon l'une quelconque des revendications 1 ou 2,
**caractérisé en ce que**
la facette de sortie (A) du cristal est inclinée de telle façon qu'en faisant tourner le cristal le résonateur ne soit pas désajusté dans le plan de l'accord de phase.

4. Oscillateur optique paramétrique (OPO) comprenant au moins un cristal optiquement non linéaire dans un résonateur optique
**caractérisé en ce que**
les plans des facettes d'entrée et de sortie (E, A) du cristal forment un angle aigu (β), la facette d'entrée (A) du cristal étant inclinée de telle façon qu'en faisant tourner le cristal le résonateur ne soit pas désajusté dans le plan de l'accord de phase.
